(19) **Europäisches Patentamt**

**European Patent Office**

**Office européen des brevets**

(11) **EP 1 069 740 A2**

(12) **EUROPÄISCHE PATENTANMELDUNG**

(43) Veröffentlichungstag:
17.01.2001 Patentblatt 2001/03

(51) Int. Cl.⁷: **H04L 27/26**

(21) Anmeldenummer: **00115160.4**

(22) Anmeldetag: **12.07.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **16.07.1999 DE 19933535**

(71) Anmelder:
**PolyTrax Information Technology AG
81829 München (DE)**

(72) Erfinder:
• **Täger, Wolfgang, Dr.
81673 München (DE)**
• **Ulbricht, Michael
17154 Neukalen (DE)**

(74) Vertreter:
**Strehl Schübel-Hopf & Partner
Maximilianstrasse 54
80538 München (DE)**

(54) **Synchronisationsverfahren für Mehrträgerübertragung**

(57)     Bei einem Verfahren zur Synchronisation der Datenübertragung mittels eines Frequenzmultiplexverfahrens, bei dem kodierte Daten blockweise auf mehrere Trägerfrequenzen innerhalb eines oder mehrerer Frequenzbänder moduliert und an einen Empfänger übertragen werden, wobei im Empfänger der Anfang eines Signalblocks mittels eines mit dem Signal übertragenen Synchronisationssignals bestimmt wird, wird vorgeschlagen, vor Beginn des Signalblocks als Synchronisationssignal zeitlich aufeinanderfolgend mehrfach einen Synchronisationsblock einer bestimmten Länge (L) mit einer oder mehreren Trägerfrequenzen als Synchronisationsfrequenzen zu übertragen und im Empfänger durch Vergleich der um eine oder mehrere Blocklängen (L) auseinanderliegenden Signalwerte den Signalblockanfang zu ermitteln. Hierdurch wird insbesondere bei der Datenübertragung in Stromnetzen eine genaue und recheneffiziente Synchronisation möglich, bei der zusätzlich Nutzinformationen übertragen werden können.

FIG.1

EP 1 069 740 A2

**Beschreibung**

Die Erfindung betrifft ein Verfahren zur Synchronisation der Datenübertragung mittels eines Frequenzmultiplexverfahrens, bei dem kodierte Daten blockweise auf mehrere Trägerfrequenzen innerhalb eines oder mehrerer bestimmter Frequenzbänder moduliert und an einen Empfänger übertragen werden, wobei im Empfänger der Anfang eines Signalblocks mittels eines mit dem Signal übertragenen Synchronisationssignals bestimmt wird. Insbesondere soll das Synchronisationsverfahren bei der Datenübertragung in Stromnetzen mittels eines orthogonalen Frequenzmultiplexverfahrens (OFDM orthogonal frequency-division multiplexing, DMT discrete multitone) geeignet sein.

Das Prinzip der OFDM-Modulation besteht darin, ein verfügbares Frequenzband in einzelne Unterträger aufzuteilen. Da diese Unterträger orthogonal zueinander sind, lassen sich die Frequenzantworten der Unterträger überschneiden, so daß eine hohe spektrale Effizienz erreicht wird. Zur Datenübertragung werden die zu übertragenden Daten geeignet kodiert und auf die Unterträger aufmoduliert. Diese können beispielsweise über das Stromversorgungs-Wechselstromnetz (Powerline) uni- oder bidirektional an einen Empfänger übertragen werden. Als Frequenzbänder stehen in Europa gemäß der Norm CENELEC EN 50065 die Bänder A bis D zur Verfügung, die die folgenden Frequenzbereiche abdecken: 9 bis 95 bzw. 95 bis 125 bzw. 125 bis 140 bzw. 140 bis 148,5 kHz. Da nahezu alle Haushalte und Gebäude an Stromnetze angeschlossen sind, ist eine solche (Powerline)-Datenübertragung erstrebenswert und spart das zusätzliche Verlegen von Zweidrahtleitungen, Koaxialkabeln oder Lichtleitfasern ein. Da Stromnetze ursprünglich jedoch nicht für die Datenübertragung konzipiert waren, wirken sich die unterschiedlichen Eigenschaften der Leitungen bei den verschiedenen Hochfrequenzen, die Leitungsverluste, die örtlich variierenden Eigenschaften des Übertragungsmediums sowie die mannigfaltigen Störsignale problematisch aus. Rauschen wird verursacht durch elektrische Geräte (Fernsehgeräte, Computer, Rundfunksender), die auch schmalbandige Störungen hoher Leistungsdichte verursachen können, von Ein- und Ausschaltvorgängen, die impulsartige Spannungsspitzen auslösen sowie auch durch Übersprechen zwischen Leitungen innerhalb desselben Kabels. Insbesondere bei tiefen Frequenzen besteht ein starkes breitbandiges Rauschen. Schließlich schwankt die Dämpfung innerhalb des Übertragungskanals. Ein Verfahren, das sich speziell für die Datenübertragung in Stromnetzen eignet, ist beispielsweise in der deutschen Anmeldung 199 00 324.6 geschildert.

Um die Signalverarbeitung im Empfänger am Anfang eines übertragenen Signalblocks beginnen zu lassen, muß zwischen Sender und Empfänger eine Synchronisation stattfinden. Hierzu können beispielsweise Pilotzeichen verwendet werden, die dem Empfänger bekannt sind, der den empfangenen Signalstrom auf das Vorhandensein solcher Pilotzeichen überprüft. Hierzu müssen zusätzlich zum Synchronisationszeichen die Eigenschaften des Übertragungskanals bekannt sein, eine Voraussetzung, die sich bei der Datenübertragung auf Stromnetzen nicht immer erfüllen läßt.

Ein weiteres Synchronisationsverfahren, das häufig angewandt wird, ist beispielsweise in "Low Complex Frame Synchronisation in OFDM Systems", 1995, IEEE (Proceedings of International Conference on Universal Personal Communication, pages 982 to 986, Japan, November 1995) beschrieben. Dort wird ein kleiner Signalabschnitt des letzten Teils des OFDM-Blocks (Frame) durch Kopieren an den Anfang des Blocks gesetzt, und dieser Vorspann (cyclic prefix) wird zur Synchronisation verwendet, indem nach einer Maximum-Likelihood-Methode das Maximum einer Korrelationsfunktion in Abhängigkeit von einem Parameter gesucht wird, der dem gesuchten Blockanfang entspricht. Zur Verminderung des hohen Rechenaufwands wird in dieser Schrift vorgeschlagen, die empfangenen Signalwerte auf einen komplexen Bitstrom zu reduzieren.

Der zur Auswertung der kopierten Synchronisationsabschnitte erforderliche Rechenaufwand wird noch dadurch erhöht, daß jeder einzelne OFDM-Block auf diese Weise synchronisiert wird. Ein Teil der Rechenleistung wird daher während der Datenübertragung für den Synchronisationsvorgang aufgewandt und steht somit für die eigentliche Signalverarbeitung nicht mehr zur Verfügung. Das bekannte Synchronisationsverfahren zeigt sich instabil gegen Impulsstörungen, die sich einem der beiden kopierten Blockteile überlagern und somit die Korrelation zerstören können.

Aufgabe vorliegender Erfindung ist es, ein neues Synchronisationsverfahren für die Datenübertragung mittels eines Frequenzmultiplexverfahrens anzugeben, das sich stabil gegen nachteilige, schwankende Eigenschaften des Übertragungskanals erweist und das sich insbesondere für eine schmalbandige Datenübertragung in Stromnetzen eignet.

Diese Aufgabe wird erfindungsgemäß durch die Merkmale des Anspruchs 1 gelöst. Vorteilhafte Ausgestaltungen ergeben sich aus den Unteransprüchen.

Beim erfindungsgemäßen Synchronisationsverfahren werden eine oder mehrere Trägerfrequenzen mit vorgegebener Amplitude und Phase zur Bildung eines Synchronisationsblocks einer bestimmten Länge L verwendet, der dann mehrfach zeitlich aufeinanderfolgend an den Empfänger übertragen wird. Dort findet dann ein Vergleich der empfangenen Signalwerte, die um eine oder mehrere Blocklängen (L) voneinander entfernt sind, statt, wobei aus einer festgestellten Übereinstimmung auf das Vorhandensein der Synchronisationsblöcke und daraus schließlich auf den Anfang des Signalblocks geschlossen wird.

Das erfindungsgemäße Synchronisationsverfahren ist daher in der Lage, den Beginn einer Signalfolge bereits nach wenigen überprüften Signalwerten zu erkennen. Im Gegensatz zu den bekannten Verfahren mit blockweiser Verarbeitung kann jeder Synchronisations-Signalwert unmittelbar nach seinem Eintreffen bearbeitet werden, wobei eine Bearbeitung in Echtzeit möglich ist. Nach der Synchronisation erfolgt die Datenübertragung und der Empfang in Form von Signalblöcken, die ihrerseits nicht mehr blockweise synchronisiert sind. Dies erspart Rechenaufwand, so daß die Rechenkapazität für die eigentliche Signalverarbeitung verwendet werden kann. Das erfindungsgemäße Synchronisationsverfahren kommt mit zwei zeitlich hintereinander übertragenen Synchronisationsblöcken aus, wobei durch Amplituden- und/oder Phasenmodulation der Synchronisationsfrequenzen während der Synchronisation Nutzinformationen (z.B. hinsichtlich der Art der Datenübertragung) übertragen werden können. Bei einer bidirektionalen Datenübertragung kann eine Rückantwort während des zweiten Synchronisationsblocks stattfinden, beispielsweise zur Bestätigung der Synchronisation bzw. der Art der Datenübertragung.

Beim erfindungsgemäßen Synchronisationsverfahren findet die Synchronisation am Anfang und nicht während der Signalübertragung statt, so daß eine bessere Rechnerauslastung gewährleistet ist. Die zu Beginn übertragenen Synchronisationsblöcke müssen dem Empfänger nicht bekannt sein (wie etwa bei der Synchronisation mittels Pilotzeichen). Weiterhin stützt sich die Synchronisation nicht nur auf zu empfangende Energiewerte, da diese bei unbekannter Dämpfung des Übertragungskanals nicht festzulegen sind.

Bei bidirektionaler Datenübertragung kann somit vor der eigentlichen Übertragung von Daten auf die Rückantwort des Empfängers gewartet werden, was bei der blockweisen Synchronisation mittels eines kopierten Signalvorspanns nicht möglich ist.

Es reicht aus, ist aber auch notwendig, den Synchronisationsblock zweimal zeitlich aufeinanderfolgend zu übertragen.

Vorteilhaft ist die Verwendung von mindestens drei Synchronisationsfrequenzen innerhalb der verwendeten Frequenzbänder für die Trägerfrequenzen, um Nutzinformation geeignet kodieren zu können.

Um bei einer Datenübertragung im Stromnetz dort vorhandene Frequenzstörungen zu beseitigen, ist es vorteilhaft, das empfangene Signal auf den Bereich der Synchronisationsfrequenzen oder zumindest auf den Bereich der Trägerfrequenzen zu filtern. Dies kann beispielsweise nach Digitalisierung des Signals mittels digitaler Signalverarbeitung mit implementiertem Bandpaßfilter geschehen. Hierdurch wird das Empfangssignal auf den Bereich der Synchronisationsfrequenzen konzentriert und außerhalb liegende Störfrequenzen werden unterdrückt. Ein weiterer Vorteil ist eine signifikante Verringerung der Rauschleistung, die sich in der anschließenden Signalauswertung positiv auswirkt.

Zum Auffinden des Signalblockanfangs werden, wie bereits oben erwähnt, empfangene Signalwerte miteinander verglichen, die voneinander den Abstand der ein- oder mehrfachen Länge eines Synchronisationsblocks besitzen. Dieser Vergleich kann durch einfache Differenzbildung stattfinden, die im Falle übereinstimmender Synchronisationsblöcke zur Nullbildung führt.

Vorzugsweise soll einerseits eine unbeabsichtigte Auslösung des Datenempfangs aufgrund einer fälschlich angenommenen Synchronisation bei Impulsstörungen oder Kanaländerungen vermieden werden. Findet andererseits während des Sychronisationsvorgangs eine solche Störung statt, und es erfolgt durch den Empfänger keine Synchronisation und daher keine Bestätigung, so sollte der Sychronisationsvorgang wiederholt werden. Und während dieses Synchronisationsvorgangs sollen Berechnungen möglichst recheneffizient ausgeführt werden.

Hierzu ist es vorteilhaft, die Energie (E) des abgetasteten Signals gemäß

$$E[y(n)] = \alpha \cdot E[y(n-1)] + (y(n))^2,$$

wobei $y(n)$ der $n$-te Signalwert ist und $E\{y(0)\} = 0$, $0 < \alpha < 1$,
und die Energie der Differenzwerte gemäß

$$E_D[y(n)] = \alpha \cdot E_D[y(n-1)] + (y(n)-y(n-L))^2,$$

wobei $E_D[y(0)] = 0$,
zu berechnen und anschließend den Quotienten $E/E_D$ zu bilden, wobei nach Überschreiten eines vorbestimmten Grenzwertes dieses Quotienten der Signalblockanfang bestimmt wird. Der Faktor $\alpha$ liegt hierbei vorteilhaft zwischen 0,5 und 1, oder besser zwischen 0,9 und 1. Wird der zeitlich nachfolgende Synchronisationsblock mit umgekehrten Vorzeichen übertragen, so tritt an die Stelle der Differenzbildung für die Berechnung der Energie $E_D$ eine einfache Summation.

Stimmen die abgetasteten Werte $y(n)$ und $y(n-L)$ überein, da der zweite Synchronisationsblock empfangen wird, so nähert sich die Energie $E_D$ der Differenzwerte mit einer von dem Faktor $\alpha$ abhängigen Verzögerung dem Wert 0 an, während die Energie $E$ des abgetasteten Signals stetig steigt, so daß der Quotient $E/E_D$ stark anwächst. Das Überschreiten eines vorgegebenen Grenzwertes für diesen Quotienten läßt daher einen Rückschluß auf den Zeitpunkt des Beginns des Synchronisationsblocks und damit auf den Signalblockanfang zu. Die Größe der Verzögerung zwischen Synchronisationsblockbeginn und Grenzwertüberschreitung läßt sich bei diesem Modell mit hoher Genauigkeit bestimmen. Eine weitere Präzisierung kann von einer Feinsynchronisation vorgenommen werden.

Das Synchronisationsverfahren mit Hilfe von Energiewerten eignet sich für die Datenübertragung in Stromnetzen, da sie im Falle von Impulsstörungen nicht eine unbeabsichtigte Synchronisation des Empfängers bewirkt. Der Energiequotient wäre in diesem Fall von der Impulsstörung beherrscht und würde einen Wert von etwa 1 annehmen. Gleiches gilt für den Fall einer Störungsspitze in einem der Synchronisationsblöcke, woraufhin der Energiewert $E_D$ vom Signalwert der Störungsspitze beherrscht sein würde, so daß innerhalb der Blocklänge L ein Abfall auf 0 nicht mehr stattfindet. Diese Art von Synchronisationsverfahren löst den Datenempfang beim Empfänger somit nicht bei Impulsstörungen aus. Schwankende Dämpfungen des Übertragungsweges werden durch die Mittelwertbildung herausgemittelt.

Schließlich ist es vorteilhaft, mit dem Synchronisationsblock Daten an den Empfänger zu übermitteln, die beispielsweise Informationen zur anschließenden Datenübertragung enthalten.

Im folgenden soll ein Ausführungsbeispiel anhand der beigefügten Zeichnungen die Erfindung näher erläutern.

Figur 1 zeigt als Blockschaltbild das Prinzip einer Anlage zur Datenübertragung über das Wechselstromnetz.
Figur 2 zeigt ein erfindungsgemäßes Synchronisationssignal im Zeitraum.
Figur 3 zeigt den Verlauf des Quotienten $E/E_d$, wobei in Figur 3B der Kurvenverlauf von Figur 3A im Schlußbereich mit höherer Auflösung gezeigt ist.
Figur 4 zeigt ein über das Wechselstromnetz übertragenes Signal, wobei das Nutzsignal in Figur 4A, das Rauschen in Figur 4B und das sich ergebende überlagerte Signal in Figur 4C dargestellt ist.

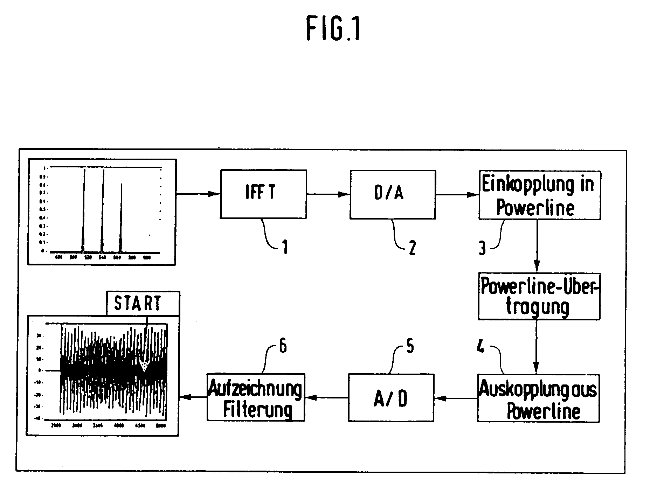

Zur sogenannten Powerline-Datenübertragung wird, wie in **Figur 1** gezeigt, in einem Sender 1, 2, 3 eine Modulation von Daten auf verschiedene Trägerfrequenzen vorgenommen, wobei in einer Einrichtung 1 mittels inverser Fourier-Transformation (IFFT) ein Signal im Zeitraum erzeugt wird, welches nach Wandlung über einen D/A-Wandler 2 und über einen Koppler 3 als analoges Signal in die Stromleitung (Powerline) des Wechselstromnetzes eingekoppelt wird. Beim Empfänger 4, 5, 6 wird das Signal über einen Koppler 4, einen A/D-Wandler 5 ausgekoppelt, in einer Einrichtung 6 gefiltert und aufgezeichnet und demoduliert.

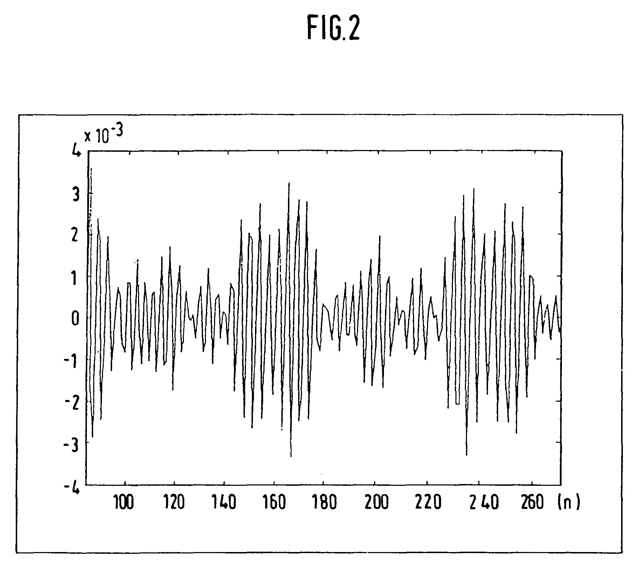

Es werden beispielsweise drei Frequenzen als Synchronisationsfrequenzen festgelegt. Bei einer Übertragung innerhalb des B-Bandes der CENELEC-Norm EN 50065 zwischen 95 und 125 kHz werden die Synchronisationsfrequenzen beispielsweise im Bereich von 100-110 kHz gewählt. Sollen gleichzeitig mit dem Synchronisationssignal Nutzinformationen an den Empfänger übertragen werden, bietet sich die Auswahl von etwa 5 Frequenzen an, auf die -wie bei der Signalübertragung- Nutzinformationen aufmoduliert werden. Hierzu kann die bekannte Quadraturamplitudenmodulation (QAM) verwendet werden. Durch inverse Fouriertransformation mit einem Fast-Fourier-Transformation-Algorithmus in der Einrichtung 1 erhält man im Zeitraum ein entsprechendes Signal, das zur Einkopplung in das Stromnetz mittels des D/A-Wandlers 2 in analoge Form gebracht wird. Der Ausschnitt eines solchen Synchronisationssignals ist in **Figur 2** dargestellt. Beim Empfänger wird nun ein Signal mittels Koppler 4 aus dem Wechselstromnetz ausgekoppelt und mittels des A/D-Wandlers 5 digitalisiert. Zur Auswertung des Signals ist es notwendig, den exakten Zeitpunkt zu ermitteln, zu dem die eigentliche Datenübertragung beginnt.

Hierzu wird vom Sender ein Synchronisationssignal aus zeitlich aufeinanderfolgenden Synchronisationsblöcken auf der Powerline übertragen. Die Länge (L) eines Synchronisationsblocks ist gemäß der inversen Fouriertransformation in 2048 Punkte unterteilt. Die Blöcke werden mehrfach, mindestens zweimal, mit gleichem oder wechselndem Vorzeichen als Analogsignal in das Stromnetz eingekoppelt und auf diese Weise dem Empfänger zur Verfügung gestellt.

Im Empfänger wird das ausgekoppelte und digitalisierte Signal nun einer erfindungsgemäß arbeitenden Synchronisationsroutine sampleweise zugeführt. Hierzu wird vorteilhafterweise das Signal vor der Weiterbearbeitung einer softwaremäßigen Filterung in der Einrichtung 6 unterzogen. Durch die Bandpasscharakteristik der Filterung wird das Empfangssignal auf den Bereich der Synchronisationsfrequenzen konzentriert und außerhalb liegende Störfrequenzen unterdrückt, was wiederum zu einer signifikanten Verringerung der Rauschleistung führt, die sich in der anschließenden Signalauswertung positiv auswirkt. Im konkreten Anwendungsbei-spiel wird ein Butterworth-Filter dritter Ordnung verwendet.

Der erfindungsgemäße Vergleich zweier Synchronisationsblöcke zur Bestimmung des Signalblockanfangs wird im vorliegenden Ausführungsbeispiel dadurch vorgenommen, daß der Energiewert E des einlaufenden Samples gemäß

$$E[y(n)] = \alpha \cdot E[y(n-1)] + (y(n))^2$$

berechnet wird, wobei $0{,}9 < \alpha < 1$ gewählt wird. Gleichzeitig wird die Differenz zwischen dem aktuellen und dem vor einer Blocklänge L aufgezeichneten Samplewert bestimmt und die Differenzenergie $E_D$

$$E_D[y(n)] = \alpha \cdot E_D[y(n-1)] + (y(n)-y(n-L))^2$$

berechnet wird, wobei L = 2048.

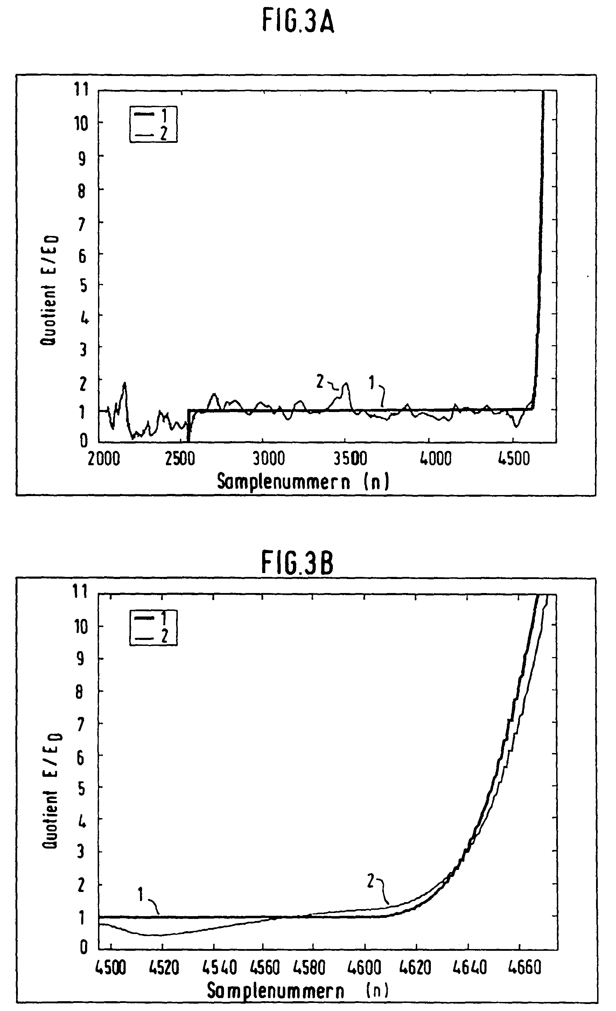

Werden die Synchronisationsblöcke mit invertierendem Vorzeichen übertragen, so ist anstelle der Subtraktion der Samplewerte eine einfache Addition notwendig. Als Kriterium zur Ermittlung des Blockanfangs dient nun der Quotient $E/E_D$. Der Verlauf dieses Quotienten ist in **Figur 3** dargestellt. Unter der Annahme eines schwachen Rauschsignals, das heißt kleinerer Werte für E sowie für $E_D$ sollte der Quotient $E/E_D$ um den Wert 1 schwanken. Aus praktischen Gründen wird, um eine Division durch Null zu verhindern, der Quotient $E/E_d = E/(E_D + \varepsilon)$ verwendet. Aus diesem Grunde ergeben sich ohne vorhandenes Synchronisationssignal bei geringem Rauschen Werte nahe Null (siehe Kurve 1). Bei Empfang des ersten Synchronisationsblocks steigen die Energiewerte E und $E_D$ in etwa gleich stark an, wenn davon ausgegangen wird, daß die um eine Blocklänge zurückliegenden Werte bei geringer Rauschleistung wenig beisteuern. Der Quotient $E/E_d$ springt deshalb auf einen Wert von etwa 1 (siehe Kurve 1 in Figur 3A). Mit Empfang des zweiten Synchronisationsblocks nehmen die Werte für $E_D$ wieder ab und streben mit einer von $\alpha$ abhängigen Verzögerung auf den Wert Null zu, während die Werte E kontinuierlich ansteigen. Dies hat zur Folge, daß der Quotient $E/E_d$ wie in Figur 3A dargestellt sehr stark ansteigt. Dieser Anstieg ist in Figur 3B mit höherer Auflösung nochmals wiedergegeben.

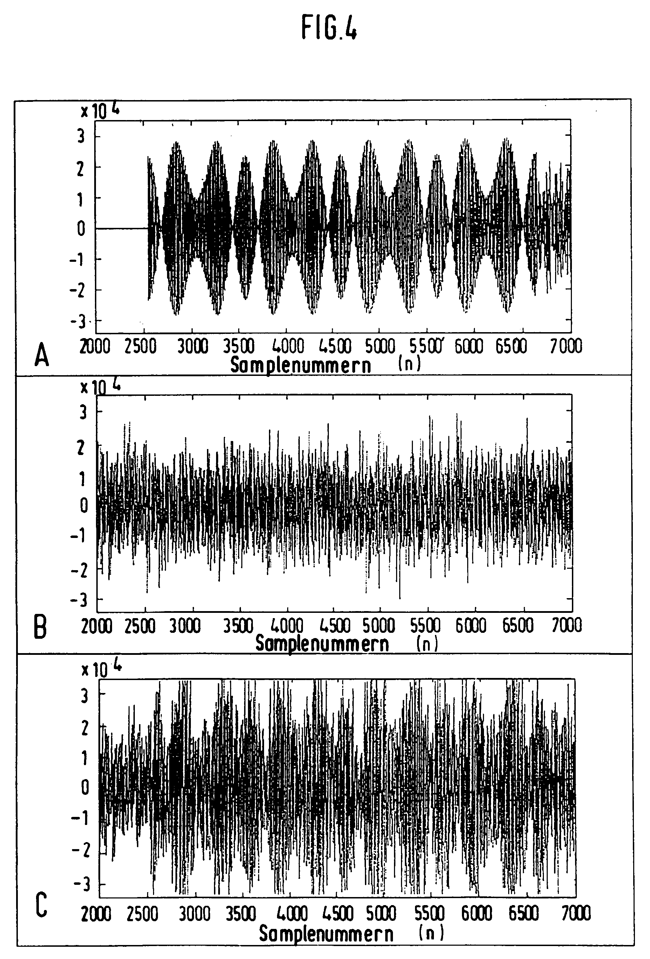

Der geschilderte Anstieg ist auch aus Kurve 2 zu entnehmen, die die Verhältnisse bei Überlagerung des Synchronisationssignals mit einem starken Rauschsignal wiedergibt (vgl. auch **Figur 4**). Dieses Rauschen beseitigt zwar den mit dem ersten Synchronisationsblock einsetzenden Sprung in Kurve 1, jedoch nicht den starken Anstieg beim Einlaufen des zweiten Synchronisationsblocks.

Im vorliegenden Beispiel wurde der erste Synchronisationsblock zum Zeitpunkt der Samplenummer 2.548 und der zweite Synchronisationsblock bei 4.596 ausgesandt. Ausgehend von einem festzulegenden sicheren Grenzwert und einer empirisch gut bestimmbaren Verzögerung des Anstiegs des Energiequotienten, kann der Blockanfang sehr genau festgelegt werden. Unter den Idealbedingungen der Kurve 1 wird bei 4.596 der zweite Blockanfang erkannt, also mit exakter Genauigkeit. Unter den starken Rauschverhältnissen der Kurve 2 wird der Blockanfang bei 4.602, also mit 6 Sample Abweichung, immer noch relativ genau erkannt. Bei der vorliegend hohen Samplezahl ist bei den wenigen Samplen Abweichung das Synchronisationsergebnis ausreichend genau. Etwaige Präzisierungen können von einer nachgeschalteten Feinsynchronisation vorgenommen werden.

**Figur 4** zeigt Nutzsignal, Rauschen und das sich ergebende überlagerte Signal in den Figuren 4A bzw. 4B bzw. 4C. Das in Figur 4A dargestellte Nutzsignal liegt der in **Figur 3** dargestellten Kurve 1 zugrunde. Das durch starkes Rauschen überlagerte Nutzsignal in Figur 4C bildet die Grundlage für den Verlauf der Kurve 2 in **Figur 3**. Das Ergebnis macht klar, daß auch bei extremen Rauschverhältnissen das erfindungsgemäße Synchronisationsverfahren gute Ergebnisse liefert.

Im Sender sind die Einrichtung 1 und eine Einrichtung zur vorgeschalteten Modulation der Daten auf die Trägerfrequenzen vorteilhafterweise in einem digitalen Signalprozessor DSP verwirklicht. Ähnlich sind im Empfänger die Einrichtung 6 und eine Einrichtung zur Ausführung des Synchronisationsverfahrens in einem digitalen Signalprozessor DSP realisiert, der nach der erwähnten Synchronisationsroutine arbeitet.

**Patentansprüche**

1.    Verfahren zur Synchronisation der Datenübertragung mittels eines Frequenzmultiplexverfahrens, bei dem kodierte Daten blockweise auf mehrere Trägerfrequenzen innerhalb eines oder mehrerer bestimmter Frequenzbänder moduliert und an einen Empfänger übertragen werden, wobei im Empfänger der Anfang eines Signalblocks mittels eines mit dem Signal übertragenen Synchronisationssignal bestimmt wird,
      dadurch **gekennzeichnet**, daß vor Beginn des Signalblocks als Synchronisationssignal zeitlich aufeinanderfolgend mehrfach ein Synchronisationsblock einer bestimmten Länge (L) mit einer oder mehreren Trägerfrequenzen als Synchronisationsfrequenzen übertragen wird, und daß im Empfänger durch Vergleich der um eine oder mehrere Blocklängen (L) auseinanderliegenden Signalwerte der Signalblockanfang ermittelt wird.

2.    Verfahren nach Anspruch 1, dadurch gekennzeichnet, daß der Synchronisationsblock zweimal übertragen wird.

3.    Verfahren nach Anspruch 1 oder 2, dadurch gekennzeichnet, daß mindestens drei Synchronisationsfrequenzen zur Modulation des Synchronisationsblocks verwendet werden.

4.    Verfahren nach einem der Ansprüche 1 bis 3, dadurch gekennzeichnet, daß das empfangene Signal im Empfänger zunächst einer Filterung auf den Bereich der Synchronisationsfrequenzen oder zumindest der Trägerfrequenzen unterzogen wird.

5.    Verfahren nach einem der vorhergehenden Ansprüche, dadurch gekennzeichnet, daß zum Vergleich der um die ein- oder mehrfache Blocklänge (L) auseinanderliegenden Signalwerte das Signal abgetastet und Differenzwerte der entsprechenden Signalwerte gebildet werden.

6.    Verfahren nach einem der Ansprüche 1 bis 5, dadurch gekennzeichnet, daß die Energie (E) des abgetasteten Signals gemäß

$$E[y(n)] = \alpha \cdot E[y(n-1)] + (y(n))^2$$

berechnet wird, wobei y(n) der n-ten Signalwert ist und $E[y(0)] = 0$ , $0 < \alpha < 1$, daß die Energie der Differenzwerte gemäß

$$E_D[y(n)] = \alpha \cdot E_D[y(n-1)] + (y(n)-y(n-L))^2,$$

wobei $E_D[y(0)] = 0$,

berechnet und anschließend der Quotient $E/E_D$ gebildet wird, wobei nach Überschreiten eines vorbestimmten Grenzwertes dieses Quotienten der Signalblockanfang bestimmt wird.

7. Verfahren nach einem der vorhergehenden Ansprüche, dadurch gekennzeichnet, daß mit dem Synchronisationsblock Daten für den Empfänger kodiert werden.

8. Verfahren nach einem der vorhergehenden Ansprüche, dadurch gekennzeichnet, daß die Daten mittels Quadraturamplitudenmodulation (QAM) kodiert und/oder mittels eines orthogonalen Frequenzmultiplexverfahrens (OFDM) moduliert werden.

9. Verfahren nach einem der vorhergehenden Ansprüche, dadurch gekennzeichnet, daß als Frequenzband ein oder mehrere Bänder der europäischen Norm (CENELEC EN 50065), insbesondere das B-Band dieser Norm im Bereich von 95 bis 125 kHz, verwendet werden.

10. Verfahren nach einem der vorhergehenden Ansprüche, dadurch gekennzeichnet, daß die Signale im Niederspannungsverteilnetz übertragen werden.

11. Verfahren nach einem der vorhergehenden Ansprüche, dadurch gekennzeichnet, daß der Signalblock sowie der Synchronisationsblock in einem digitalen Signalprozessor (DSP) im Frequenzraum erzeugt und durch inverse Fouriertransformation in den Zeitraum transformiert und anschließend mittels eines D/A-Wandlers gewandelt und in den Übertragungskanal eingespeist werden.

12. Verfahren nach Anspruch 6, dadurch gekennzeichnet, daß im Empfänger das Signal zunächst einem A/D-Wandler zugeführt und mittels eines digitalen Signalprozessors (DSP) der Energiequotient $E/E_D$ berechnet wird.

# FIG.1

FIG.2

## FIG.3A

## FIG.3B

# FIG.4